# EUROPÄISCHE PATENTSCHRIFT

(11) **EP 4 208 654 B1**
(45) Veröffentlichungstag und Bekanntmachung des Hinweises auf die Patenterteilung: **05.06.2024**
(21) Anmeldenummer: 21772985.4
(22) Anmeldetag: 27.08.2021
(51) Int. Cl.: F16G 13/16

(54) **ENERGIEFÜHRUNGSKETTE MIT LEITUNGSSCHONENDER INNENAUFTEILUNG SOWIE KETTENGLIED UND RAHMENMODUL HIERFÜR**
ENERGY TRANSMISSION CHAIN HAVING A CABLE-PROTECTING INTERNAL SUBDIVISION, AND CHAIN LINK AND FRAME MODULE THEREFOR
CHAÎNE DE TRANSMISSION D'ÉNERGIE À SUBDIVISION INTERNE DE PROTECTION DE CÂBLE, ET MAILLON DE CHAÎNE ET MODULE DE STRUCTURE ASSOCIÉS

(30) Priorität: 01.09.2020 DE 202020105039 U
(43) Veröffentlichungstag der Anmeldung: 12.07.2023
(73) Patentinhaber: Igus GmbH, 51147 Köln (DE)
(72) Erfinder: JAEKER, Thilo-Alexander, 53757 Sankt Augustin (DE); BARTEN, Dominik, 53340 Meckenheim (DE); MATTONET, Peter, 51515 Kürten (DE)
(74) Vertreter: Lippert Stachow Patentanwälte Rechtsanwälte
(86) Internationale Anmeldenummer: PCT/EP2021/073703
(87) Internationale Veröffentlichungsnummer: WO 2022/048995

(56) Entgegenhaltungen:
- EP-A2- 0 415 034

## Beschreibung

Die Erfindung betrifft allgemein das Gebiet der Energieführungsketten zur geschützten, dynamischen Führung von Leitungen wie Kabeln, Schläuchen und dergleichen und insbesondere einen modularen Baukasten mit einem oder mehreren Rahmenmodulen zur leitungsschonenden Innenaufteilung für Energieführungsketten. Die Erfindung betrifft im Einzelnen auch ein Kettenglied mit einer leitungsschonenden Innenaufteilung. Kettenglieder umfassen typisch zwei voneinander beabstandete und durch zwei Querstege miteinander verbundene Seitenlaschen, die einen Innenraum zum Führen von Leitungen begrenzen und jeweils dem Innenraum zugewandte Innenflächen aufweisen.

Ferner betrifft die Erfindung ein Rahmenmodul als separates Bauteil zur leitungsschonenden Innenaufteilung eines Kettenglieds einer Energieführungskette.

Energieführungsketten sind typisch gliederartig aus in einer Längsrichtung schwenkbar miteinander verbundenen Kettengliedern aufgebaut, welche zwei quer zur Längsrichtung voneinander beabstandete Seitenlaschen aufweisen. Diese sind zumindest bei einigen der Kettenglieder durch mindestens einen Quersteg, häufig auch zwei Querstege stabil miteinander verbunden und definieren einen in Längsrichtung offenen Innenraum bzw. Führungskanal für die zu führenden Leitungen. Querstege können fest mit den Seitenlaschen verbunden oder abnehmbar sein bzw. aufschwenkbar sein. Vorliegend werden auch abnehmbare bzw. aufschwenkbare Querstege, d.h. solche die ein Öffnen des Kettenglieds ermöglichen (sog. Öffnungsstege), allgemein als Querstege bezeichnet.

Energieführungsketten haben typischerweise zwei relativ zueinander bewegliche Enden, die jeweils an einer Anschlussstelle angeschlossen sind, und führen Versorgungsleitungen von einer Anschlussstelle zur anderen. Eine typische Energieführungskette verfährt dabei zwischen den Anschlussstellen hin und her unter Bildung zweier Trume und eines Umlenkbogens zwischen den Trumen. Im Umlenkbogen wird die Richtung des jeweiligen Trums umgekehrt.

Zur Innenaufteilung ist bekannt, den Innenraum eines Kettenglieds durch Trennstege und/oder Fachböden aufzuteilen, sodass die Leitungen geordnet geführt werden können und nicht verheddern. Trennstege liegen dabei typisch vertikal und Fachböden typisch horizontal.

Bauteile eines Kettenglieds wie Seitenlaschen, Querstege, Trennstege und Fachböden sind üblicherweise jeweils plattenartig ausgeführt und meist entweder aus faserverstärktem Kunststoff erheblicher Härte oder aus Metallblech hergestellt. Beim Verfahren der Energieführungskette kommt es, insbesondere im Bereich des Umlenkbogens, wegen unvermeidbaren Relativbewegungen zu Reibung der geführten Leitungen an den Seitenlaschen, Querstegen, Trennstegen und Fachböden. Der Kontakt mit der Oberfläche der Bauteile kann einen Abrieb der Leitungen verursachen, insbesondere bei elektrischen Leitungen, die normalerweise einen Außenmantel aus einem weicheren Kunststoff haben. Die in Querrichtung liegenden plattenartigen Bauteile eines Kettenglieds sind in Längsrichtung typisch durch Freiräume beabstandet. So kann z.B. auch Kontakt mit Kanten der plattenartigen Bauteile des Kettenglieds zu Abrieb und Verschleiß der geführten Leitungen führen.

Vor diesem Hintergrund ist bereits ein Kettenglied mit leitungsschonender Innenaufteilung EP 1 564 438 A2 oder EP 0 415 034 A2 vorgeschlagen worden. Die dem Innenraum bzw. dem Führungskanal zugewandten Flächen der Seitenlaschen, der Querstege, der Trennstege und der Fachböden nach EP 1 564 438 A2 sind mit einer speziellen reibungsmindernden Beschichtung überzogen. Diese bekannte Lösung setzt Kettenglieder aus speziell beschichteten Seitenlaschen und Querstegen voraus, in welche die beschichteten Trennstege und Fachböden, auch nachträglich, eingebaut werden können. Um eine bestehende Energieführungskette zur Abriebminderung geeignet auszurüsten, müssen auch die Innenflächen der Seitenlaschen und der Querstege der Kettenglieder beschichtet werden. Dies ist prozesstechnisch sehr aufwendig bzw. mit hohem Herstellungsaufwand verbunden. Eine Nachrüstung ist kaum möglich. Somit ist diese bekannte Lösung bei der Herstellung mit erheblichem Aufwand verbunden und für ein Nachrüsten bzw. eine Wartung kaum geeignet. Eine Aufgabe der vorliegenden Erfindung ist es mithin, ein Kettenglied mit leitungsschonender Innenaufteilung vorzuschlagen, die eine besonders einfache und schnelle Herstellung bzw. Montage, und auch ein leichtes Nachrüsten bzw. vereinfachte Wartung des Kettenglieds ermöglicht.

Dies wird bei einem gattungsgemäßen Kettenglied nach dem Oberbegriff des Anspruchs 1 bereits dadurch erreicht, dass ein Rahmenmodul zwischen den beiden Querstegen des Kettenglieds montiert ist und einen Teilbereich des Innenraums im Wesentlichen umrahmt. Der Begriff Rahmenmodul bezeichnet vorliegend einen oder mehrere Einbaurahmen, die modular eingebaut werden können. Zur Innenaufteilung begrenzt das Rahmenmodul mindestens einen Führungsraum für mindestens eine Leitung, d.h. umlaufend um die Längsrichtung bzw. im Querschnitt senkrecht zur Längsrichtung.

Das Rahmenmodul kann dabei zwei Seitenwände sowie zwei quer zu den Seitenwänden verlaufende Querbereiche umfassen, wobei jeder der Querbereiche jeweils einen Teil der Innenfläche eines Querstegs abdeckt und eine leitungsschonende und dem Führungsraum des Rahmenmoduls zugewandte Auflagefläche für mindestens eine Leitung bildet.

Die Erfindung betrifft ferner ein derartiges Rahmenmodul für sich genommen, zur leitungsschonenden Innenaufteilung eines Kettenglieds einer Energieführungskette, wobei das Rahmenmodul als separate einteilige oder mehrteilige Einheit ausgeführt und somit zum Montieren bzw. Einsetzen in den Innenraum eines Kettenglieds geeignet ist und ggf. auch wieder entnehmbar ist bspw. zum Austausch oder wenn bei der Wartung ein Zugang zu Leitungen erforderlich ist.

Erfindungsgemäß ist das Rahmenmodul nach dem Oberbegriff des Anspruchs 2 zwischen Querstegen eines Kettenglieds montierbar, um einen Teilbereich des Innenraums im Wesentlichen zu umrahmen und zur Innenaufteilung mindestens einen Führungsraum für mindestens eine Leitung zu begrenzen. Das Rahmenmodul kann dabei zwei Seitenwände sowie zwei quer zu des Seitenwänden verlaufende Querbereiche umfassen, wobei jeder Querbereich zum Abdecken jeweils eines Teils der Innenfläche eines Querstegs und zum Bilden einer leitungsschonenden Auflagefläche für eine oder mehrere Leitungen ausgebildet ist. Der Begriff Abdecken ist hierbei in weitem Sinne zu verstehen, dahingehend, dass die Querbereiche primär vermeiden, dass die im Rahmenmodul angeordneten Leitungen mit den Querstegen in Berührung gelangen. Durchgehend abdeckende bzw. überdeckenden Flächen sind hierfür vorteilhaft aber nicht zwingend notwendig. Es ist ggf. auch keine vollständige Überdeckung erforderlich.

Das Rahmenmodul ist in einem Querschnitt quer zur Längsrichtung rahmenförmig. Der Querschnitt kann insbesondere rechteckig bzw. allgemein kastenförmig, vorzugsweise mit innenseitig abgerundeten Ecken und Stirnkanten sein. Der Rahmen des Rahmenmoduls muss jedoch in der Umfangsrichtung nicht vollständig geschlossen d.h. muss nicht vollumlaufend sein.

Das Rahmenmodul kann somit zugleich die Funktion der für Energieführungsketten an sich bekannten Trennstege bei der Innenaufteilung erfüllen, u.a. ein Verheddern der geführten Leitungen vorzubeugen, und erfindungsgemäß zusätzlich eine leitungsschonende Abdeckung der Querstege und der Seitenlaschen bereitstellen.

Somit kann ein Teil der Führungsflächen bzw. die den Führungskanal zum Führen von Leitungen begrenzenden Flächen eines Kettenglieds, die bestimmungsgemäß mit den geführten Leitungen in Berührung kommen können, durch das bzw. die leitungsschonende/s Rahmenmodul/e bereitgestellt werden. Die Rahmenmodule können den Innenraum teilweise einteilen.

Besonders bevorzugt werden sämtliche Führungsflächen für alle Leitungen im Innenraum durch ein oder mehrere Rahmenmodule bereitgestellt, sodass keine Leitungen mit eigentlichen Struktur-Bauteilen des Kettenglieds, insbesondere den Seitenlaschen und Querstegen in Berührung kommt.

Ein Ziel hierbei ist es, den leitungsbedingten Abrieb so gering wie möglich zu halten, indem alle Leitungen mittels zugeordneten Rahmenmodulen vor Kontakt mit Struktur-Bauteilen des Kettenglieds geschützt werden. So kann leitungsbedingter Abrieb minimiert werden.

Dies kann auch eine elektrische Isolierung bewirken was z.B. bei Kettengliedern aus Metall vorteilhaft ist.

Eine Innenaufteilung ordnet die geführten Leitungen auf einfache Weise in getrennte Führungsräume ein und mindert dabei zugleich den Verschleiß, der durch ein Verheddern der Leitungen und deren Reibung an den Querstegen und Seitenlaschen entstehen kann.

Die erfindungsgemäße Innenaufteilung erzielt dabei eine gesteigerte Schonwirkung gegen Abrieb und schützt damit die Leitungen.

Zudem wirkt die erfindungsgemäße Innenaufteilung besonders abriebmindernd, insbesondere durch Verminderung von Abrieb bedingt durch Reibung des Außenmantels der Leitungen an den Kettengliedern. Durch Verringerung der im Betrieb von den Leitungen freigesetzten Partikel ist die Erfindung daher für Reinraumanwendungen oder ähnliche abriebkritische Anwendungen besonders vorteilhaft.

Das Rahmenmodul besteht vorzugsweise aus mindestens einem Modulelement, das als separates Bauteil ausgeführt ist. Auch bestehende Energieführungsketten können mit dem Rahmenmodul nachgerüstet werden, indem die Modulelemente des Rahmenmoduls in die Kettenglieder zwischen den Querstegen eingesetzt werden.

Das Rahmenmodul kann auch aus zwei oder mehr gleichen oder verschiedenen Modulelementen bestehen. Verschiedene Modulelemente können sich insbesondere in der Breite, d.h. Abmessung in der Querrichtung, unterscheiden, und in der Tiefenrichtung bzw. der Längsrichtung sowie in der Höhenrichtung quer zur Längs- und Querrichtung gleich sein. Verschiedene Modulelemente können entlang eines Querstegs, d.h. in der Querrichtung, aneinander angereiht werden, insbesondere direkt aneinander. Somit kann aus einer Anzahl unterschiedlicher Modulelemente ein Baukastensystem zur wahlweisen Konfiguration von Rahmenmodulen, je nach gewünschter Innenaufteilung und Dimensionierung des Kettenglieds bereitgestellt werden.

Die gesamte Innenseite eines Querstegs eines Kettenglieds kann insbesondere von einer zur anderen Seitenlasche mit den Modulelementen bedeckt sein, sodass der Innenraum des Kettenglieds vorteilhaft zur Führung von Leitungen ausgenutzt werden kann.

Das Rahmenmodul umfasst vorzugsweise und zumindest an den Innenflächen, welche den Leitungen zugewandt sind, einen abriebmindernden Kunststoff bzw. einen Kunststoff der mit typischen Kunststoffen für den Außenmantel flexibler elektrischer Leitungen eine hinsichtlich Abriebreduzierung und im Vergleich zu typischen Kunststoffen der Struktur-Bauteile des Kettenglieds eine abriebmindernde Materialpaarung bildet. Das Rahmenmodul umfasst dabei vorzugsweise einen gleitoptimierten Kunststoff, und ist insbesondere hergestellt bzw. besteht insbesondere aus einem gleitoptimierten Kunststoff. Der Kunststoff kann ein gleitoptimierter Thermoplast sein, insbesondere ein gleitoptimierter Polyethylen (PE), gleitoptimierter HD-PE (high density polyethylene), und/oder gleitoptimierter UHMW-PE (ultra high molecular weight polyethylene). Der Kunststoff des Rahmenmoduls kann und soll vorteilhaft reibungsmindernd im Vergleich zum Material der Querstege bzw. der Seitenlaschen wirken und kann insbesondere selbstschmierend sein. Der Kunststoff des Rahmenmoduls kann im Vergleich zum Material der Querstege bzw. der Seitenlaschen insbesondere einen niedrigeren statischen und/oder dynamischen Reibungskoeffizienten aufweisen, wenn diese Reibungskoeffizienten unter gleichen Bedingungen, u.a. mit demselben Gleitpartner.

Das Rahmenmodul kann mindestens eine Befestigungsvorrichtung aufweisen und mit deren Hilfe an mindestens einem der Querstege form- und/ oder kraftschlüssig befestigt sein.

Das Rahmenmodul kann zwei Befestigungsvorrichtungen zum Befestigen jeweils an einem der Querstege aufweisen.

Die beiden Befestigungsvorrichtungen können baugleich sein.

Das Rahmenmodul kann insbesondere spiegelsymmetrisch relativ zu einer Ebene, die parallel zu den Querbereichen und quer zur Seitenwänden verläuft, ausgeführt sein. Der Vorteil dieser einfachen Ausführungsform liegt vor allem in Vereinfachung der Montage, da das Rahmenmodul nicht in einer falschen Ausrichtung eingebaut werden kann.

Die jeweilige Befestigungsvorrichtung kann vorzugsweise außenseitig am jeweiligen Querbereich vorgesehen sein und/ oder gebildet sein, vorzugsweise einstückig mit dem Querbereich ausgeführt sein.

In einer vorteilhaften Ausführungsform ist die Befestigungsvorrichtung in Form einer Halteklammer ausgebildet, zum Zusammenwirken mit Schmalseiten eines Querstegs. Die Halteklammer kann insbesondere als Rast- oder Clipverbinder ausgeführt sein. Ein Querbereich eines Rahmenmoduls kann dabei zwei Randbereiche aufweisen, die von der leitungsschonenden Auflagefläche und relativ zu dem Führungsraum nach außen hin vorragen bzw. abstehen zum formund/oder kraftschlüssigen Befestigung an den Schmalseiten eines Querstegs. Die Halteklammer kann z.B. im Querschnitt quer zur Längsrichtung L- oder C-förmig geformt sein. Der Quersteg kann an sich bekannte Befestigungsleisten an seinen Schmalseiten aufweisen, wie bspw. Befestigungsleisten zum Befestigen von Trennstegen, umfassend insbesondere eine Zahnreihe und/oder eine Haltenut, wobei die Randbereiche des Querbereichs eines Rahmenmoduls zum Zusammenwirken mit üblichen Befestigungsleisten von Querstegen ausgebildet sein können. In einer Ausführungsform kann Einführöffnung, insbesondere ein schmaler und vergrößerbarer Einführspalt, zum Einführen von mindestens einer Leitung in der Querrichtung vorgesehen sein. Hierbei kann die Seitenwand vorzugsweise biegsam ausgeführt ist bzw. aufgebogen werden, um den Einführspalt zu vergrößern und einen Zugang zu dem Führungsraum des Rahmenmoduls zum Einlegen oder Herausnehmen zumindest einer Leitung in der Querrichtung zu ermöglichen. Hierdurch wird vermieden, dass die Leitungen axial eingezogen werden müssen und somit die Leitungswartung vereinfacht.

Die Einführöffnung kann z.B. mittig in einer Seitenwand oder vorzugsweise zwischen einer Seitenwand und einem Querbereich des Rahmenmoduls vorgesehen sein. Somit kann eine Seitenwand des Rahmenmoduls nur mit einem Querbereich verbunden sein; zwischen dem anderen Querbereich des Rahmenmoduls und dieser Seitenwand, bzw. einseitig, kann ein Einführspalt vorgesehen sein, sodass die Seitenwand einen freien Rand aufweisen und der Einführspalt vorübergehend vergrößert werden kann.

Alternativ oder ergänzend kann ein Gelenk, bspw. Scharnier oder Filmgelenk o.ä., vorgesehen sein, welches eine Seitenwand mit einem Querbereich des Rahmenmoduls verbindet, wobei die Seitenwand dem Gelenk gegenüberliegend ein freies Ende aufweist und an eine Einführöffnung grenzt.

Das Rahmenmodul kann insbesondere einteilig ausgeführt sein und aus lediglich einem Modulelement bestehen.

Alternativ, kann das Rahmenmodul mehrteilig ausgeführt sein und mindestens zwei Modulelemente umfassen, welche insbesondere jeweils einstückig ausgeführt sind und jeweils zwei Querbereiche und mindestens eine Seitenwand aufweisen. Das erlaubt eine, insbesondere hinsichtlich der Aufteilungsbreite, modular kombinierbare Innenaufteilung aus wenigen Einzelteilen. Die einen Rahmenmodul bildenden Modulelemente müssen nicht unbedingt aneinander befestigt sein, sie können lediglich auf einem Quersteg nebeneinander befestigt sein, vorzugsweise direkt nebeneinander, und einen umlaufenden Rahmen um die Längsrichtung bilden, welcher auch unterteilt sein kann.

Jedes der Modulelemente ist vorzugsweise zum beidseitigen Befestigen an beiden Querstegen ausgebildet. Somit kann jedes Modulelement im bestimmungsgemäßen eingebauten Zustand mit beiden Querstegen gleichzeitig in Verbindung stehen.

Die Querbereiche sind vorzugsweise jeweils einstückig mit zumindest einer der Seitenwände ausgeführt.

Ein Modulelement kann bspw. eine Seitenwand und zwei Querbereiche oder zwei Seitenwände und zwei Querbereiche aufweisen.

In einer einfachen Ausführungsform können die Seitenwände parallel zueinander und die Querbereiche senkrecht zu den Seitenwänden verlaufen. Diese Ausführungsform ist besonders platzsparend und ermöglicht ein optimales Ausnutzen des Kettenglied-Innenraums.

Das Rahmenmodul bzw. das Modulelement kann mindestens einen Fachboden zwischen den Querbereichen aufweisen, der den Führungsraum des Rahmenmoduls unterteilt. Der mindestens einer Fachboden kann jeweils einstückig mit zumindest einer der Seitenwände ausgeführt sein.

Der mindestens eine Fachboden kann plattenartig ausgeführt sein und parallel zu den Querbereichen und senkrecht zu mindestens einer Seitenwand verlaufen.

Jeder Querbereich kann zwecks Kantenschutz der geführten Leitungen vorzugsweise gerundete Stirnflächen an der Auflagefläche aufweisen. Bei dieser Ausführungsform können die aus dem Kettenglied in die Längsrichtung ein- oder austretenden Leitungen vor Reibung an den Längskanten der Querstege geschützt werden.

Die Querstege, die Seitenlaschen und die Rahmenmodule sind vorzugsweise jeweils im Spritzgussverfahren hergestellt oder aus im Spritzgussverfahren hergestellten Bauteilen zusammengesetzt.

Die Erfindung betrifft ferner eine Energieführungskette zur geschützten Führung von Leitungen wie Kabeln, Schläuchen oder dergleichen zwischen zwei relativ zueinander beweglichen Anschlussstellen, wobei die Energieführungskette Kettenglieder nach einer der vorstehenden Ausführungsformen umfasst.

Zumindest die Mehrheit der Kettenglieder der Energieführungskette können nach einer der vorstehenden Ausführungsformen ausgebildet sein. Die Energieführungskette besteht bevorzugt im Wesentlichen aus solchen Kettengliedern.

Die Erfindung eignet sich besonders zur Kombination mit bzw. Verwendung in reinraumtauglichen Energieführungsketten, welche für sich genommen bereits abriebmindernd gestaltet sind. Derartige Energieführungsketten können insbesondere biegesame Gelenkelemente zur Verbindung der Kettenglieder aufweisen, wie z.B. in WO 02/086349 A1 oder in WO 2012/131033 A1 durch die Anmelderin vorgeschlagen.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen rein beispielhaft:
- FIG.1A, B:: ein Ausführungsbeispiel eines Kettenglieds einer rein beispielhaft mit Leitungen und einer Innenaufteilung bestückten Energieführungskette, in Frontansicht (FIG.1A) und perspektivisch (FIG.1B);
- FIG.2:: ein erstes Ausführungsbeispiel eines Rahmenmoduls in perspektivischer Ansicht;
- FIG.3:: ein zweites Ausführungsbeispiel eines Rahmenmoduls in perspektivischer Ansicht;
- FIG.4:: ein drittes Ausführungsbeispiel eines Rahmenmoduls in perspektivischer Ansicht;
- FIG.5: ein viertes Ausführungsbeispiel eines Rahmenmoduls in perspektivischer Ansicht;
- FIG.6A, B: perspektivische Ansichten von Modulelementen für ein Rahmenmodul nach einem fünften Ausführungsbeispiel; und
- FIG.7A, B: weitere Ausführungsbeispiele eines Rahmenmoduls in Frontansicht.

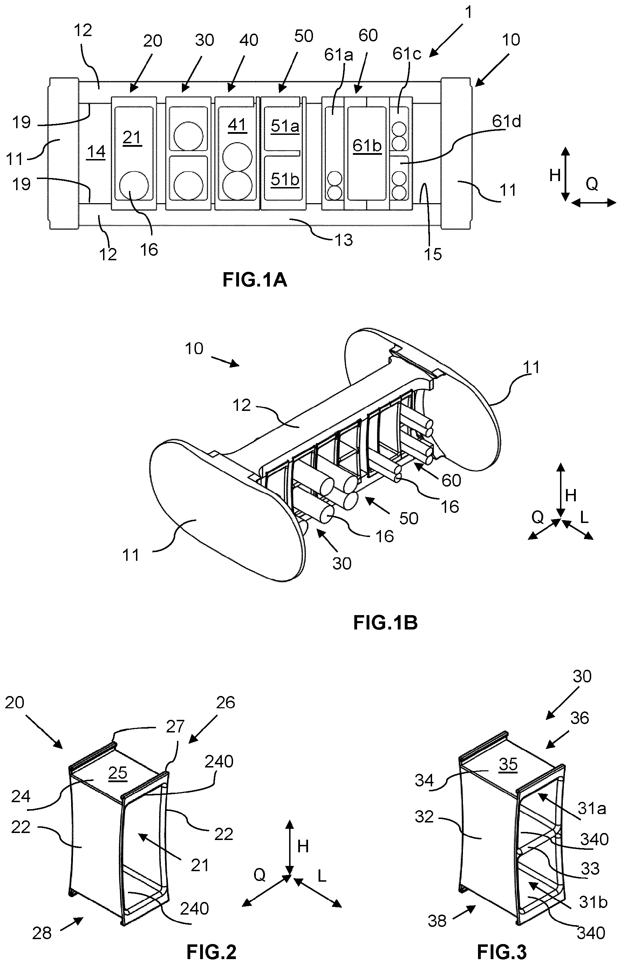

FIG.1A veranschaulicht in Frontansicht entlang der Längsrichtung L eines Kettenglieds 10 einer Energieführungskette 1 einen beispielhaften Innenaufbau bzw. eine Innenaufteilung der Energieführungskette 1 zum aktiven Führen von Leitungen 16, wie z.B. Kabeln und Schläuchen. Die Energieführungskette 1 ist aus einer Vielzahl miteinander schwenkbar verbundener Kettenglieder 10 in Längsrichtung L senkrecht zur Ebene der FIG.1A zusammengesetzt. Die Kettenglieder 10 bestehen hier ebenfalls aus Einzelteilen und haben zumindest zwei Seitenlaschen 11, die durch zwei parallele, identische Querstege 12 zu einem stabilen Gerüst fest verbunden und auf Abstand in Querrichtung Q der Energieführungskette 1 und parallel zueinander gehalten. Die Querstege 12 werden dazu mittels endseitigen Befestigungsbereichen, z.B. mittels Klemmaufnahmen an Hörnern (nicht gezeigt) der Seitenlaschen 11, lösbar an den Seitenlaschen 11 befestigt. Die Seitenlaschen 11 und Querstege 12 begrenzen einen Innenraum 14 zum Führen von Leitungen 16. Der Aufbau einer Energieführungskette 1 ist bekannt und kann beliebig sein, z.B. mit gekröpften Seitenlaschen oder alternierenden Innen- und Außenlaschen als Seitenlaschen 11. Insbesondere kommen auch zweiteilige Kettenglieder in Betracht, bei welchen die zwei Seitenlaschen und ein Quersteg aus einem Stück, d.h. einteilig, hergestellt sind und nur der andere Quersteg lösbar ist (nicht gezeigt).

Das Kettenglied 10 umfasst im gezeigten Ausführungsbeispiel rein beispielhaft fünf verschieden konfigurierte Rahmenmodule 20, 30, 40, 50 und 60. Jedes der Rahmenmodule 20 bis 60 ist als separate Einheit zwischen den Querstegen 12 bzgl. der Höhenrichtung H sowie zwischen den Seitenlaschen 11 bzgl. der Querrichtung Q fest eingesetzt und hält an den Schmalseiten 13 der beiden Querstege 12. Die Seitenlaschen 11 und die Querstege 12 sind aus einem faserverstärkten Kunststoff, bspw. faserverstärktem Polyamid, im Spritzgussverfahren hergestellt. Die Rahmenmodule 20, 30 und 40 50 sind dabei jeweils einteilig aus gleitoptimiertem HD-PE im Spritzgussverfahren hergestellt. Das Rahmenmodul 60 hingegen ist in diesem Beispiel aus vier einzelnen Modulelementen 600a, 600b zusammengesetzt. Die Modulelementen 600a, 600b sind jeweils aus gleitoptimiertem HD-PE im Spritzgussverfahren einteilig hergestellt.

Die Rahmenmodule 20 bis 50 sind in den FIG.2 bis FIG.5 perspektivisch gezeigt und einteilig bzw. bestehen jeweils aus lediglich einem Modulelement.

FIG.2 zeigt ein besonders einfaches Ausführungsbeispiel eines Rahmenmoduls 20, das als einteiliger rechteckiger Rahmen ausgeführt ist, der einen Führungsraum 21 umrahmt. Der Führungsraum 21 ist in diesem Beispiel nur entlang der Längsrichtung L zum Durchführen der Leitungen 16 zugängig. Der Rahmen hat zwei identische Seitenwände 22 und zwei identische Querbereiche 24, die senkrecht zu den Seitenwänden 22 verlaufen. Jede Seitenwand 22 ist bei diesem Beispiel mit beiden Querbereichen 24 direkt verbunden bzw. einteilig hergestellt. Die Querbereiche 24 weisen an der außenseitig jeweils eine Halteklammer 26, 28 auf. Die in FIG.2 oben und unten gezeigten Halteklammern 26 bzw. 28 sind identisch ausgeführt und weisen an der Außenseite 25 des jeweiligen Querbereichs 24 jeweils zwei L-förmige Randbereiche 27 auf, die jeweils in eine Nut (nicht gezeigt) an den Schmalseiten 13 des Querstegs 12 eingreifen können, um das Rahmenmodul 20 an den Querstegen 12 form- und kraftschlüssig zu befestigen. Wenn das Rahmenmodul 20 im Innenraum 14 des Kettenglieds 10, wie in FIG.1A gezeigt, montiert ist, umklammern die Halteklammern 26, 28 die Kante 19 des jeweiligen Querstegs 12, wobei das flache Teil des jeweiligen Querbereichs 24 die Innenfläche 15 des jeweiligen Querstegs 12 abdeckt. Somit kommen die in dem Führungsraum 21 geführten Leitungen 16 nicht in Kontakt mit dem Material der Seitenlaschen 11 bzw. der Querstege 12. Die Querbereiche 24 bilden jeweils an der dem Führungsraum 21 des Rahmenmoduls 20 zugewandten Seite leitungsschonende Auflageflächen 240 für die Leitungen 16. Der Übergang von der jeweiligen Auflagefläche 240 zum jeweiligen Randbereich 27 ist zum Schutz der Leitungen 16 abgerundet.

FIG.3 zeigt ein weiteres Ausführungsbeispiel des Rahmenmoduls 30, das sich vom Rahmenmodul 20 lediglich dadurch unterscheidet, dass es zusätzlich einen Fachboden 33 umfasst, der parallel zu den Querbereichen 34 und senkrecht zu den Seitenwänden 32 verläuft und direkt mit den beiden Seitenwänden 32 verbunden ist bzw. einstückig mit den beiden Seitenwänden 32 hergestellt ist. Der Fachboden 33 unterteilt den Führungsraum des Rahmenmoduls 30 in zwei getrennte und identische Führungsräume 31a, 31b für jeweils eine Leitung 16 auf und bildet zusätzliche Auflageflächen 340. Die Schmalseiten des Fachbodens 33 sind abgerundet.

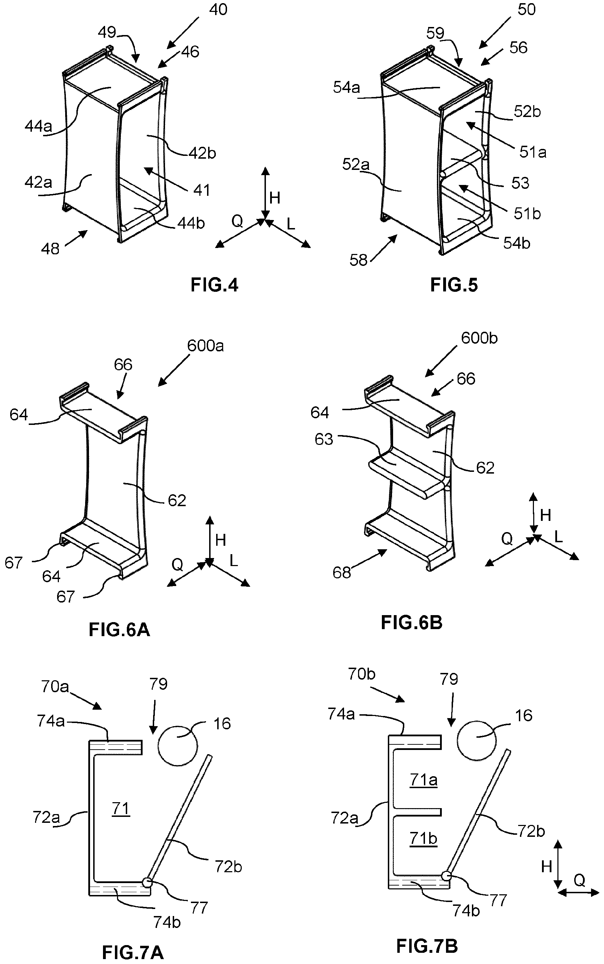

FIG.4 zeigt ein drittes Ausführungsbeispiel des Rahmenmoduls 40, das sich vom Rahmenmodul 20 lediglich dadurch unterscheidet, dass es keinen um die Längsrichtung L geschlossenen Rahmen bildet, sondern einen Einführspalt bzw. eine Einführöffnung 49 zwischen der einen Seitenwand 42b und dem einen Querbereich 44a aufweist. Die Einführöffnung 49 kann zum Einlegen bzw. Herausnehmen von Leitungen 16 benutzt werden, indem die Seitenwand 42b zur Seite gebogen bzw. verschwenkt wird, um die Einführöffnung 49 reversibel zu vergrößern. Die Seitenwand 42b ist vorzugsweise biegsam, bspw. federelastisch, und einstückig mit dem Querbereich 44b hergestellt, sodass kein Gelenk erforderlich ist. Auch ein Gelenk z.B. ein Filmscharnier zum Aufschwenken der Seitenwand 42b liegt im Rahmen der Erfindung. Die Seitenwand 42a ist einstückig mit den beiden Querbereichen 44a und 44b hergestellt.

FIG.5 zeigt ein viertes Ausführungsbeispiel des Rahmenmoduls 50, das sich vom Rahmenmodul 40 lediglich dadurch unterscheidet, dass es zusätzlich einen Fachboden 53 umfasst, der parallel zu den Querbereichen 54 und senkrecht zu den Seitenwänden 52a, 52b verläuft und den Führungsraum des Rahmenmoduls 50 in zwei getrennte und in diesem Beispiel identische Führungsräume 51a, 51b für jeweils eine Leitung 16 unterteilt. Der Fachboden 53 ist lediglich mit der einen Seitenwand 52a wie eine Konsole direkt verbunden bzw. einstückig hergestellt.

In den alternativen Beispielen in FIG.7A-7B ist die verschwenkbare Seitenwand 72b des Rahmenmoduls 70a, 70b durch ein Scharnier 77 mit einem der Querbereiche 74b verbunden, was die Vergrößerung der Einführöffnung 79 ermöglicht, um eine oder mehrere Leitungen 16 in den Führungsraum 71 bzw. 71a, 71b einzulegen. Ansonsten ist das Rahmenmodul 70a gleich wie der Rahmenmodul 40 in FIG.4 und das Rahmenmodul 70b gleich wie der Rahmenmodul 50 in FIG.5 ausgebildet.

Das Rahmenmodul 60 in FIG.1 besteht aus mehreren, hier vier modular zusammengesetzten, jeweils einteiligen Modulelementen: drei Modulelemente 600a und ein Modulelement 600b. Die Modulelemente weisen jeweils eine Seitenwand 62 und zwei Querbereiche 64 auf. Das Modul 600b weist zusätzlich einen Fachboden 63 auf. Die Modulelemente 600a, 600b sind so an den Querstegen 12 nebeneinander befestigt, dass sie ein Rahmenmodul 60 bilden, das vier getrennte Führungsräume für Leitungen aufweist: 61a, 61b, 61c, und 61d. Die Querbereiche 64 decken jeweils einen Teil der Innenfläche 15 des Querstegs 12 ab, sodass sie nicht in Kontakt mit den in den Führungsräumen 61a, 61b, 61c 61d geführten Leitungen 16 kommen kann. FIGn.6A, B zeigen die Modulelemente 600a, 600b im Detail. Jedes Modulelement weist jeweils eine Halteklammer 66, 68 an den dem Führungsraum abgewandten Außenseiten der Querbereiche 64 auf. Die jeweilige Halteklammer 66, 68 umfasst zwei L-förmige Randbereiche 67 zum form- und/oder kraftschlüssigen Befestigen an Schmalseiten 13 der Querstege 12. Zwei oder mehr Modulelemente 600a, 600b können einen geschlossenen Rahmen um einen Teilbereich des Innenraums 14 eines Kettenglieds 10 bilden, wenn sie nebeneinander am Quersteg 12 befestigt sind, sodass die benachbarten Modulelemente 600a, 600b miteinander in direkten Kontakt kommen.

### Bezugszeichenliste

- FIG.1A, B: 1: Energieführungskette
- 10: Kettenglied
- 11: Seitenlasche
- 12: Quersteg
- 13: Schmalseite des Querstegs
- 14: Innenraum des Kettenglieds
- 15: Innenfläche des Querstegs
- 16: Leitung
- 19: Kante des Querstegs
- 20, 30, 40, 50, 60: Rahmenmodul
- 21, 31, 41, 51, 61: Führungsraum des Rahmenmoduls
- H: Höhenrichtung
- L: Längsrichtung
- Q: Querrichtung

- FIG.2, 3: 20, 30: Rahmenmodul
- 21, 31a, 31b: Führungsraum des Rahmenmoduls
- 22, 32: Seitenwand
- 33: Fachboden
- 24, 34: Querbereich
- 25, 35: Außenseite des Querbereichs
- 27: Randbereiche
- 26, 28, 36, 38: Halteklammer
- 240; 340: leitungsschonende Auflagefläche
- H: Höhenrichtung
- L: Längsrichtung
- Q: Querrichtung
- FIG.4, 5: 40, 50: Rahmenmodul
- 41, 51a, 51b: Führungsraum des Rahmenmoduls
- 42a, 42b, 52a, 52b: Seitenwand
- 53: Fachboden
- 44a, 44b, 54a, 54b: Querbereich
- 46, 48, 56,58: Halteklammer
- 49, 59: Einführöffnung
- H: Höhenrichtung
- L: Längsrichtung
- Q: Querrichtung
- FIG.6A, 6B 600a, 600b: Modulelement
- 62: Seitenwand
- 63: Fachboden
- 64: Querbereich
- 66, 68: Halteklammer
- 67: Randbereiche
- H: Höhenrichtung
- L: Längsrichtung
- Q: Querrichtung
- FIG.7A, 7B 16: Leitung
- 70a, 70b: Rahmenmodul
- 71, 71a, 71b: Führungsraum
- 72a, 72b: Seitenwand
- 74a, 74b: Querbereich
- 77: Scharnier
- 79: Einführöffnung

## Patentansprüche

1. Kettenglied (10) für eine Energieführungskette (1) zur Führung von Leitungen (16) zwischen zwei relativ zueinander beweglichen Anschlussstellen mit einer leitungsschonenden Innenaufteilung, das Kettenglied (10) umfassend zwei voneinander beabstandete und durch zwei Querstege (12) miteinander verbundene Seitenlaschen (11), die einen in einer Längsrichtung (L) offenen Innenraum (14) zum Führen von Leitungen (16) begrenzen und jeweils dem Innenraum (14) zugewandte Innenflächen (15) aufweisen,
**dadurch gekennzeichnet,**
**dass** ein Rahmenmodul (20; 30; 40; 50; 60) zwischen den beiden Querstegen (12) montiert ist, wobei das Rahmenmodul (20; 30; 40; 50; 60) einen Teilbereich des Innenraums (14) im Wesentlichen umrahmt und zur Innenaufteilung mindestens einen Führungsraum (21; 31; 41; 51; 61) im Querschnitt senkrecht zur Längsrichtung (L) begrenzt, und
**dass** das Rahmenmodul (20; 30; 40; 50; 60) zwei Seitenwände (22; 32; 42a, 42b; 52a, 52b; 62) sowie zwei quer dazu verlaufende Querbereiche (24; 34; 44a, 44b; 54a, 54b; 64) umfasst, wobei jeder Querbereich (24; ... 64) jeweils einen Teil der Innenfläche (15) eines Querstegs (12) abdeckt und eine leitungsschonende Auflagefläche (240; 340) zur leitungsschonenden Innenaufteilung bildet, wobei die Querbereiche (24; 34; 44a, 44b, 54a, 54b; 64) jeweils einstückig mit zumindest einer der Seitenwände (22; 32; 42a; 52a; 62) ausgeführt sind.

2. Rahmenmodul (20; 30; 40; 50; 60) zur leitungsschonenden Innenaufteilung eines Kettenglieds einer Energieführungskette, wobei das Kettenglied (10) zwei voneinander beabstandete und durch zwei Querstege (12) miteinander verbundene Seitenlaschen (11) aufweist, die einen in einer Längsrichtung (L) offenen Innenraum (14) zum Führen von Leitungen (16) begrenzen und jeweils dem Innenraum (14) zugewandte Innenflächen (15) aufweisen, **wobei** das Rahmenmodul (20; 30; 40; 50; 60) zwischen Querstegen (12) eines Kettenglieds (10) montierbar ist, um im montierten Zustand einen Teilbereich des Innenraums (14) im Wesentlichen zu umrahmen und zur Innenaufteilung mindestens einen Führungsraum (21; 31; 41; 51; 61) im Querschnitt senkrecht zur Längsrichtung (L) zu begrenzen, wobei das Rahmenmodul (20; 30; 40; 50; 60) zwei Seitenwände (22; 32; 42a, 42b; 52a, 52b; 62) sowie zwei quer dazu verlaufende Querbereiche (24; 34; 44a, 44b; 54a, 54b; 64) umfasst, wobei jeder Querbereich (24; ... 64) zum Abdecken jeweils eines Teils der Innenfläche (15) eines Querstegs (12) und zum Bilden einer leitungsschonenden Auflagefläche (240; 340) für Leitungen (16) zur leitungsschonenden Innenaufteilung ausgebildet ist, wobei die Querbereiche (24; 34; 44a, 44b, 54a, 54b; 64) jeweils einstückig mit zumindest einer der Seitenwände (22; 32; 42a; 52a; 62) ausgeführt sind.

3. Vorrichtung nach einem der vorstehenden Ansprüche, **dadurch gekennzeichnet, dass** das Rahmenmodul (20; 30; 40; 50; 60) aus mindestens einem Modulelement besteht, das als separates Bauteil ausgeführt ist und/oder einen reibungsmindernden bzw. gleitoptimierten Kunststoff umfasst, insbesondere aus einem gleitoptimierten Kunststoff hergestellt ist.

4. Vorrichtung nach einem der vorstehenden Ansprüche, **dadurch gekennzeichnet, dass**
- das Rahmenmodul (20; 30; 40; 50; 60) eine Befestigungsvorrichtung aufweist und an mindestens einem der Querstege (12) form- und/oder kraftschlüssig befestigt ist; oder
- das Rahmenmodul (20; 30; 40; 50; 60) zwei Befestigungsvorrichtungen zum Befestigen jeweils an einem der Querstege (12) aufweist, wobei die beiden Befestigungsvorrichtungen baugleich sind, und wobei das Rahmenmodul (20; 30; 40; 50; 60) insbesondere spiegelsymmetrisch relativ zu einer Ebene, die parallel zu den Querbereichen (24; ... 64) und quer zur Seitenwänden (22; ... 62) verläuft, ausgeführt ist; wobei die Befestigungsvorrichtung(en) vorzugsweise außenseitig an einem Querbereich (24; ... 64) vorgesehen und/oder gebildet ist.

5. Vorrichtung nach Anspruch 4, **dadurch gekennzeichnet, dass** die Befestigungsvorrichtung als eine Halteklammer (26, 28; ... 66, 68) ausgebildet ist, um mit Schmalseiten (13) eines Querstegs (12) form- und/oder kraftschlüssig zusammenzuwirken.

6. Vorrichtung nach einem der vorstehenden Ansprüche, **dadurch gekennzeichnet, dass** eine Einführöffnung (49; 59) für eine Leitung (16) vorgesehen ist, vorzugsweise zwischen einer Seitenwand (42b; 52b) und einem Querbereich (44a; 54a), wobei die Seitenwand (42b; 52b) vorzugsweise biegsam ausgeführt ist.

7. Vorrichtung nach einem der vorstehenden Ansprüche, **dadurch gekennzeichnet, dass**
- das Rahmenmodul (20; 30; 40; 50) einteilig ausgeführt ist; oder
- das Rahmenmodul (60) mehrteilig ausgeführt ist und mindestens zwei Modulelemente (600a, 600b) umfasst, welche insbesondere jeweils einstückig ausgeführt sind und jeweils zwei Querbereiche (64) und mindestens eine Seitenwand (62) aufweisen.

8. Vorrichtung nach Anspruch 6, **dadurch gekennzeichnet, dass** jedes der Modulelemente (600a, 600b) zum beidseitigen Befestigen an beiden Querstegen (12) ausgebildet ist.

9. Vorrichtung nach einem der vorstehenden Ansprüche, **dadurch gekennzeichnet, dass** die Seitenwände (22; 32; 42a, 42b; 52a, 52b) parallel zueinander und die Querbereiche (24; 34; 44a; 44b; 54a, 54b) senkrecht zu den Seitenwänden (22; 32; 42a, 42b; 52a, 52b) verlaufen.

10. Vorrichtung nach einem der vorstehenden Ansprüche, **dadurch gekennzeichnet, dass** das Rahmenmodul (30; 50; 60) zwischen den Querbereichen (34; 54a, 54b; 64) mindestens einen Fachboden (33; 53; 63) aufweist, der den Führungsraum (31; 51; 61) des Rahmenmoduls (30; 50; 60) unterteilt und zusätzliche Auflageflächen (340) für Leitungen (16) bildet.

11. Vorrichtung nach einem der vorstehenden Ansprüche, **dadurch gekennzeichnet, dass** jeder Querbereich (24; 34; 44a, 44b; 54a, 54b; 64) zwecks Kantenschutz der geführten Leitungen (16) gerundete Stirnflächen an der Auflagefläche aufweist.

12. Vorrichtung nach einem der vorstehenden Ansprüche, **dadurch gekennzeichnet, dass** die Querstege (12), die Seitenlaschen (11), und die Rahmenmodule (20; 30; 40; 50; 60) jeweils im Spritzgussverfahren hergestellt sind oder aus im Spritzgussverfahren hergestellten Bauteilen zusammengesetzt sind.

13. Energieführungskette (1) zur Führung von Leitungen (16) wie Kabeln, Schläuchen oder dergleichen zwischen zwei relativ zueinander beweglichen Anschlussstellen, **dadurch gekennzeichnet, dass** die Energieführungskette (1) Kettenglieder (10) nach einem der Ansprüche 1 oder 3 bis 12 umfasst.

14. Energieführungskette (1) nach Anspruch 13, **dadurch gekennzeichnet, dass** zumindest die Mehrheit der Kettenglieder (10) nach Anspruch 1 oder einem der Ansprüche 3 bis 12 ausgebildet sind.

## Claims

1. Chain link (10) for an energy guide chain (1) for guiding lines (16) between two connection points that are movable relative to one another, having a line-protecting internal subdivision, the chain link (10) comprising two mutually spaced-apart side plates (11) which are connected to one another by two crossbars (12) and which delimit an interior space (14) open in a longitudinal direction (L) for guiding lines (16), and which in each case have inner surfaces (15) facing toward the interior space (14),
**characterized**
**in that** a frame module (20; 30; 40; 50; 60) is mounted between the two crossbars (12), wherein the frame module (20; 30; 40; 50; 60) substantially frames a sub-region of the interior space (14) and, for the purposes of internal subdivision, delimits at least one guide space (21; 31; 41; 51; 61) in cross section perpendicular to the longitudinal direction (L), and
**in that** the frame module (20; 30; 40; 50; 60) comprises two side walls (22; 32; 42a, 42b; 52a, 52b; 62) and two transverse regions (24; 34; 44a, 44b; 54a, 54b; 64) running transverse thereto, wherein each transverse region (24; ... 64) in each case covers a part of the inner surface (15) of a crossbar (12) and forms a line-protecting bearing surface (240; 340) for the purposes of line-protecting internal subdivision, wherein the transverse regions (24; 34; 44a, 44b, 54a, 54b; 64) are in each case formed in one piece with at least one of the side walls (22; 32; 42a; 52a; 62).

2. Frame module (20; 30; 40; 50; 60) for line-protecting internal subdivision of a chain link of an energy guide chain, wherein the chain link (10) has two mutually spaced-apart side plates (11) which are connected to one another by two crossbars (12) and which delimit an interior space (14) open in a longitudinal direction (L) for guiding lines (16), and which in each case have inner surfaces (15) facing toward the interior space (14), **wherein** the frame module (20; 30; 40; 50; 60) is mountable between crossbars (12) of a chain link (10) in order, in the mounted state, to substantially frame a sub-region of the interior space (14) and, for the purposes of internal subdivision, to delimit at least one guide space (21; 31; 41; 51; 61) in cross section perpendicular to the longitudinal direction (L), wherein the frame module (20; 30; 40; 50; 60) comprises two side walls (22; 32; 42a, 42b; 52a, 52b; 62) and two transverse regions (24; 34; 44a, 44b; 54a, 54b; 64) running transverse thereto, wherein each transverse region (24; ... 64) is formed to cover in each case a part of the inner surface (15) of a crossbar (12) and to form a line-protecting bearing surface (240; 340) for lines (16) for the purposes of line-protecting internal subdivision, wherein the transverse regions (24; 34; 44a, 44b, 54a, 54b; 64) are in each case formed in one piece with at least one of the side walls (22; 32; 42a; 52a; 62).

3. Device according to one of the preceding claims, **characterized in that** the frame module (20; 30; 40; 50; 60) consists of at least one module element, which is designed as a separate component and/or which comprises a friction-reducing or sliding-optimized plastic, in particular is produced from a sliding-optimized plastic.

4. Device according to one of the preceding claims, **characterized in that**
- the frame module (20; 30; 40; 50; 60) has a fastening device and is fastened in a positive-locking and/or force-locking manner to at least one of the crossbars (12); or
- the frame module (20; 30; 40; 50; 60) has two fastening devices for fastening in each case to one of the crossbars (12), wherein the two fastening devices are structurally identical, and wherein the frame module (20; 30; 40; 50; 60) is in particular designed mirrorsymmetrical relative to a plane which runs parallel to the transverse regions (24; ... 64) and transverse to the side walls (22; ... 62); wherein the fastening devices are provided and/or formed preferably on the outside of a transverse region (24; ... 64).

5. Device according to claim 4, **characterized in that** the fastening device is formed as a retaining bracket (26, 28; ... 66, 68) in order to interact in a positive-locking and/or force-locking manner with narrow sides (13) of a crossbar (12).

6. Device according to one of the preceding claims, **characterized in that** an insertion opening (49; 59) for a line (16) is provided, preferably between a side wall (42b; 52b) and a transverse region (44a; 54a), wherein the side wall (42b; 52b) is preferably designed bendable.

7. Device according to one of the preceding claims, **characterized in that**
- the frame module (20; 30; 40; 50) is designed singlepart; or
- the frame module (60) is designed multi-part and comprises at least two module elements (600a, 600b), which in particular are in each case designed as a single piece and in each case have two transverse regions (64) and at least one side wall (62).

8. Device according to claim 6, **characterized in that** each of the module elements (600a, 600b) is formed for fastening on both sides to both crossbars (12).

9. Device according to one of the preceding claims, **characterized in that** the side walls (22; 32; 42a, 42b; 52a, 52b) run parallel to one another, and the transverse regions (24; 34; 44a; 44b; 54a, 54b) run perpendicular to the side walls (22; 32; 42a, 42b; 52a, 52b).

10. Device according to one of the preceding claims, **characterized in that**, between the transverse regions (34; 54a, 54b; 64), the frame module (30; 50; 60) has at least one shelf (33; 53; 63), which divides up the guide space (31; 51; 61) of the frame module (30; 50; 60) and which forms additional bearing surfaces (340) for lines (16) .

11. Device according to one of the preceding claims, **characterized in that** each transverse region (24; 34; 44a, 44b; 54a, 54b; 64) has rounded end surfaces at the bearing surface for the purposes of providing edge protection for the guided lines (16).

12. Device according to one of the preceding claims, **characterized in that** the crossbars (12), the side plates (11) and the frame modules (20; 30; 40; 50; 60) are in each case produced by injection molding or assembled from components produced by injection molding.

13. Energy guide chain (1) for guiding lines (16) such as cables, hoses or the like between two connection points that are movable relative to one another, **characterized in that** the energy guide chain (1) comprises chain links (10) according to one of claims 1 or 3 to 12.

14. Energy guide chain (1) according to claim 13, **characterized in that** at least the majority of the chain links (10) are formed according to claim 1 or one of claims 3 to 12.

## Revendications

1. Maillon de chaîne (10) pour une chaîne de transmission d'énergie (1) pour le guidage de lignes (16) entre deux points de raccordement mobiles l'un par rapport à l'autre, avec une répartition intérieure ménageant les lignes, le maillon de chaîne (10) comprenant deux pattes latérales (11) espacées l'une de l'autre et reliées l'une à l'autre par deux entretoises transversales (12), qui délimitent un espace intérieur (14) ouvert dans une direction longitudinale (L) pour le guidage de lignes (16) et qui présentent chacune des surfaces intérieures (15) tournées vers l'espace intérieur (14),
**caractérisé en ce**
**qu'**un module de cadre (20; 30; 40; 50; 60) est monté entre les deux entretoises transversales (12), le module de cadre (20; 30; 40; 50; 60) encadrant sensiblement une zone partielle de l'espace intérieur (14) et délimitant, pour la répartition intérieure, au moins un espace de guidage (21; 31; 41; 51; 61) en section transversale perpendiculaire à la direction longitudinale (L), et
**en ce que** le module de cadre (20; 30; 40; 50; 60) comprend deux parois latérales (22; 32; 42a, 42b; 52a, 52b; 62) ainsi que deux zones transversales (24; 34; 44a, 44b; 54a; 54b; 64) s'étendant transversalement à celles-ci, chaque zone transversale (24; ... 64) recouvre respectivement une partie de la surface intérieure (15) d'une entretoise transversale (12) et forme une surface d'appui (240; 340) ménageant les conducteurs pour la répartition intérieure ménageant les conducteurs, les zones transversales (24; 34; 44a, 446b, 54a, 54b; 64) étant réalisées respectivement d'une seule pièce avec au moins l'une des parois latérales (22; 32; 42a; 52a; 62).

2. Module de cadre (20; 30, 40, 50; 60) pour la répartition intérieure ménageant d'un maillon de chaîne d'une chaîne de transmission d'énergie, le maillon de chaîne (10) présentant deux pattes latérales (11) espacées l'une de l'autre et reliées l'une à l'autre par deux entretoises transversales (12), qui délimitent un espace intérieur (14) ouvert dans une direction longitudinale (L) pour le guidage de conduites (16) et présentent chacune des surfaces intérieures (15) tournées vers l'espace intérieur (14), **dans lequel** le module de cadre (20; 30, 40; 50, 60) peut être monté entre des entretoises transversales (12) d'un maillon de chaîne (10) pour encadrer sensiblement une zone partielle de l'espace intérieur (14) à l'état monté et pour délimiter au moins un espace de guidage (21; 31; 41; 51; 61) en section transversale perpendiculairement à la direction longitudinale (L) pour la répartition intérieure, le module de cadre (20; 30; 40; 50; 60) comprenant deux parois latérales (22; 32; 42a, 42b; 52a, 52b; 62) ainsi que deux zones transversales (24; 34; 44a, 44b; 54a, 54b; 54a, 54b; 64) s'étendant transversalement à celles-ci, chaque zone transversale (24; ... 64) est conçue pour recouvrir respectivement une partie de la surface intérieure (15) d'une entretoise transversale (12) et pour former une surface d'appui (240; 340) ménageant les lignes pour des lignes (16) en vue d'une répartition intérieure ménageant les lignes, les zones transversales (24; 34; 44a, 44b, 54a, 54b; 64) étant réalisées respectivement d'une seule pièce avec au moins l'une des parois latérales (22; 32; 42a; 52a; 62).

3. Dispositif selon l'une quelconque des revendications précédentes, **caractérisé en ce que** le module de cadre (20; 30; 40; 50; 60) est constitué d'au moins un élément de module qui est réalisé sous la forme d'un composant séparé et/ou qui comprend une matière plastique réduisant le frottement ou optimisant le glissement, en particulier qui est fabriqué à partir d'une matière plastique optimisant le glissement.

4. Dispositif selon l'une quelconque des revendications précédentes, **caractérisé en ce que**
- le module de cadre (20; 30; 40; 50; 60) présente un dispositif de fixation et est fixé par complémentarité de forme et/ou de force à au moins l'une des entretoises transversales (12); ou
- le module de cadre (20; 30; 40; 50; 60) présente deux dispositifs de fixation pour la fixation respectivement à l'une des entretoises transversales (12), les deux dispositifs de fixation étant de construction identique et le module de cadre (20; 30; 40; 50; 60) étant réalisé en particulier avec une symétrie spéculaire par rapport à un plan qui s'étend parallèlement aux zones transversales (24; ... 64) et transversalement aux parois latérales (22; ... 62);
le(s) dispositif(s) de fixation étant de préférence prévu(s) et/ou formé(s) à l'extérieur sur une zone transversale (24; ... 64).

5. Dispositif selon la revendication 4, **caractérisé en ce que** le dispositif de fixation est réalisé sous la forme d'une pince de retenue (26, 28; ... 66, 68) pour coopérer par complémentarité de forme et/ou de force avec des côtés étroits (13) d'une entretoise transversale (12).

6. Dispositif selon l'une quelconque des revendications précédentes, **caractérisé en ce qu'**une ouverture d'introduction (49; 59) est prévue pour un conduit (16), de préférence entre une paroi latérale (42b; 52b) et une zone transversale (44a; 54a), la paroi latérale étant de préférence réalisée de manière flexible.

7. Dispositif selon l'une quelconque des revendications précédentes, **caractérisé en ce que**
- le module de cadre (20; 30; 40; 50) est réalisé en une seule pièce; ou
- le module de cadre (60) est réalisé en plusieurs parties et comprend au moins deux éléments de module (600a, 600b), qui sont notamment réalisés chacun d'un seul tenant et présentent chacun deux zones transversales (64) et au moins une paroi latérale (62).

8. Dispositif selon la revendication 6, **caractérisé en ce que** chacun des éléments de module (600a, 600b) est conçu pour être fixé des deux côtés aux deux entretoises transversales (12).

9. Dispositif selon l'une quelconque des revendications précédentes, **caractérisé en ce que** les parois latérales (22; 32; 42a, 42b; 52a, 52b) sont parallèles entre elles et les zones transversales (24; 34; 44a; 44b; 54a, 54b) sont perpendiculaires aux parois latérales (22; 32; 42a, 42b; 52a, 52b).

10. Dispositif selon l'une quelconque des revendications précédentes, **caractérisé en ce que** le module de cadre (30; 50; 60) présente entre les zones transversales (34a; 54a, 54b; 64) au moins une tablette (33; 53; 63) qui subdivise l'espace de guidage (31; 51; 61) du module de cadre (30; 50; 60) et forme des surfaces d'appui supplémentaires (340) pour des conduites (16).

11. Dispositif selon l'une quelconque des revendications précédentes, **caractérisé en ce que** chaque zone transversale (24; 34; 44a, 44b; 54a, 54b; 64) présente des surfaces frontales arrondies sur la surface d'appui afin de protéger les arêtes des conduites guidées (16).

12. Dispositif selon l'une quelconque des revendications précédentes, **caractérisé en ce que** les entretoises transversales (12), les pattes latérales (11) et les modules de cadre (20; 30; 40; 50; 60) sont respectivement fabriqués par moulage par injection ou sont assemblés à partir de composants fabriqués par moulage par injection.

13. Chaîne de transmission d'énergie (1) pour le guidage de conduites (16) telles que des câbles, des tuyaux ou similaires entre deux points de raccordement mobiles l'un par rapport à l'autre, **caractérisée en ce que** la chaîne de transmission d'énergie (1) comprend des maillons de chaîne (10) selon l'une quelconque des revendications 1 ou 3 à 12.

14. Chaîne de transmission d'énergie (1) selon la revendication 13, **caractérisée en ce qu'**au moins la majorité des maillons de chaîne (10) sont formés selon la revendication 1 ou l'une quelconque des revendications 3 à 12.
